# EUROPEAN PATENT APPLICATION

(11) **EP 1 926 235 A1**
(43) Date of publication of application: **28.05.2008**
(21) Application number: 06797732.2
(22) Date of filing: 08.09.2006
(51) Int. Cl.: H04B 7/26, H04Q 7/20

(54) **DATA TRANSMITTING SYSTEM, DATA TRANSMITTING METHOD, BASE STATION AND MOBILE STATION**

(30) Priority: 12.09.2005 JP 2005264417
(71) Applicant: NTT DoCoMo, Inc., Chiyoda-ku Tokyo 100-6150 (JP)
(72) Inventor: MOTEGI, Masayuki, Tokyo 100-6150 (JP); KATO, Yasuhiro, Tokyo 100-6150 (JP); ISHII, Minami, Tokyo 100-6150 (JP); NAKAMURA, Takehiro, Tokyo 100-6150 (JP)
(74) Representative: HOFFMANN EITLE
(86) International application number: PCT/JP2006/317906
(87) International publication number: WO 2007/032289

(57) **Abstract**

A data transmission system for multicasting user common data from one or more radio base stations to one or more mobile stations is disclosed. The radio base station includes: means configured to transmit user common data using a shared data channel, transmit associated control information using an associated control channel and transmit broadcast information using a broadcast channel. The mobile station includes: means configured to receive the shared data channel, the associated control channel and the broadcast channel; and means configured to analyze the broadcast information and the associated control information. The broadcast information includes information indicating transmission timing of the associated control channel. The associated control information includes information of a radio parameter of the shared data channel and includes distribution information indicating multicasting time of the user common data.

## Description

### TECHNICAL FIELD

The present invention relates to a technical field of radio communication. More particularly, the present invention relates to a data transmission system, a data transmission method, a base station and a mobile station for transmitting a signal for Multimedia Broadcast/Multicast Service (MBMS).

### BACKGROUND ART

In mobile communication systems in recent years, in addition to voice services of a circuit switching type, large capacity multimedia services based on a packet switching scheme are starting to be provided. In the 3GPP (3rd generation partnership project), MBMS is assumed to be used in the packet switching scheme, so that configurations of UTRAN architecture and radio channels related to MBMS are disclosed (refer to non-patent document 1). Content of the MBMS is represented by a traffic channel (MTCH), and control channels (MCCH and MSCH) for transmitting it are transmitted over SCCPCH (Secondly Common Control Physical Channel). MCCH includes control messages such as a MBMS access information message and other messages. Especially, these control messages are transmitted over the SCCPCH within a specified period (modification period) at specified repetition transmission timing (repetition period). The "Modification period" and the "Repetition period" are transmitted by PCCPCH (Primary Common Control Physical Channel), that is, they are reported by broadcast information. In addition, transmission timing of the MSCH is specified based on a timing specified by MSCH configuration information included in a "MBMS GENERAL INFORMATION" message of a RRC message or "MBMS CURRENT CELL P-T-M RB INFORMATION". Like the MCCH, the MSCH is transmitted at a repetition timing specified by the MSCH configuration information over the SCCPCH. Transmission timing of the MTCH (content of MBMS) is specified by MSCH, so that a mobile station (UE) receives the MBMS content at a specified scheduling timing. Positions where MTCH can be transmitted are not fixedly specified on the SCCPCH.
[non-patent document 1] 3GPP interface specification, "TS25.346", "TS25.331", Internet <URL:http://www.3gpp.org>

### DISCLOSURE OF THE INVENTION

### PROBLEM TO BE SOLVED BY THE INVENTION

In the conventional technique, control signals (MCCH, MSCH) for multicasting MBMS content (MTCH) are transmitted from the base station (BTS or node B) to the mobile station (UE). The UE receives broadcast information (BCCH) at a timing when the UE moves to another cell or when the terminal is powered on so as to ascertain repetitive transmission timing of MCCH at the residing cell. When the user finds interesting one in various service contents of the MBMS, the UE checks activation (when reported by MICH, and the like) of the MBMS service, and starts to receive MCCH associated with MICH. The MCCH may include MBMS access information, MBMS modification information, MBMS current cell information and MBMS general information and the like. By receiving these control signals, the UE can ascertain information necessary for receiving MBMS content such as common parameter, adjacent cell information, MSCH repetition timing and the like. By receiving MSCH at specified timing, transmission timing of MTCH (MBMS content) can be ascertained, so that MTCH can be received at the transmission timing. As mentioned above, according to the conventional method, the processes performed until the UE starts to receive MBMS content are complicated. In addition, it may decrease radio efficiency of the common channel to uniformly transmit the control information periodically over the SCCPCH.

On the other hand, in a future mobile communication system for which discussion is started in the third generation partnership project (3GPP), it is predicted that a shared radio channel and a shared control channel are used as a downlink radio channel like HSDPA (High Speed Downlink Packet Access) of R5. On the shared radio channel, like the SCCPCH, various logical channels may be transmitted irrespective of types of logical channels. However, when MCCH and MSCH are uniformly transmitted over the shared radio channel periodically in the same way as MBMS of R6 in which MCCH and MSCH are transmitted using a same radio channel (SCCPCH), it is feared that use efficiency of the shared radio channel is decreased.

The present invention is contrived for addressing at least one of the above-mentioned problems, and the object is to provide a data transmission system, a data transmission method, a base station and a mobile station for improving radio efficiency of the shared radio channel and transmitting MBMS content with a simple procedure.

### MEANS FOR SOLVING THE PROBLEM

In the present invention, a data transmission system for multicasting user common data from one or more radio base stations (BTS) to one or more mobile stations (UE) is used.

The radio base station includes means configured to transmit the user common data using a shared data channel (E-PDSCH), transmit associated control information using an associated control channel (E-SCCH) and transmit broadcast information using a broadcast channel.

The mobile station includes: means configured to receive the shared data channel, the associated control channel and the broadcast channel; and means configured to analyze the broadcast information and the associated control information.

The broadcast information includes information indicating transmission timing of the associated control channel. The associated control information includes information of a radio parameter of the shared data channel, and distribution information indicating multicasting time of the user common data.

### EFFECT OF THE INVENTION

According to the present invention, the MBMS content can be transmitted using a simple procedure without decreasing radio efficiency of the shared radio channel.

### BRIEF DESCRIPTION OF THE DRAWINGS

Fig.1 is a figure showing a communication system assumed to be used in the present embodiment;
Fig.2 is a figure showing a procedure performed until multicasting the MBMS content;
Fig.3 is a figure showing an example of control information transmitted on E-SCCH;
Fig.4 shows a functional block diagram of BTS;
Fig.5 shows a functional block diagram of UE;
Fig.6 shows a flowchart for the BTS to transmit broadcast information (BCCH);
Fig.7 shows a flowchart for the BTS to transmit E-SCCH;
Fig.8 shows a flowchart for the UE to transmit broadcast information (BCCH);
Fig.9 shows a flowchart for the UE to receive E-SCCH;
Fig.10 is a figure showing a procedure until delivering MBMS content (MTCH).

### Description of reference signs

- UE: mobile station
- BTS: base station
- BCCH: broadcast control channel
- E-PDSCH: shared radio physical channel
- E-SCCH: shared associated control channel
- MTCH: traffic channel for MBMS
- MCCH: control channel for MBMS
- MSCH: schedule channel for MBMS
- MICH: indicator channel for MBMS
- 11: control unit
- 12: radio transmission unit
- 13: cable transmission unit
- 14: timing monitoring unit
- 15: data storing unit
- 16: broadcast information generation unit
- 17: E-SCCH generation unit
- 21: control unit
- 22: radio transmission unit
- 23: broadcast information analyzing unit
- 24: E-SCCH analyzing unit
- 25: timing monitoring unit

### PREFERRED EMBODIMENTS FOR CARRYING OUT THE INVENTION

According to an embodiment of the present invention, user common data is transmitted using a shared data channel (E-PDSCH), and associated control information including at least a radio parameter of the shared data channel is transmitted using an associated control channel (E-SCCH), and broadcast information is transmitted using a broadcast channel. By periodically transmitting, as broadcast information, common configuration parameters (transmission timing of the associated control channel, access control information, and the like) that are not dependent on MBMS services, the control signal for MBMS can be multicasted while controlling decrease of radio efficiency of the associated control channel. In addition, as an example, if it is assumed that positions where resources for MBMS can be assigned on a radio channel is limited, setting procedure of RB (radio bearer) can be omitted. After powered on or when moving to another cell, UE receives broadcast information, and after that, the UE can receive multicast of MTCH only by receiving E-SCCH. Thus, multicasting procedure of MTCH can be simplified.

The associated control channel may be coded using code associated with a predetermined identifier. A part of the associated control channel including distribution information may be coded using code associated with a group identifier of the user common data, and other associated control channel may be coded using code associated with an identifier of each user. Accordingly, distribution information of MBMS and control information to each user can be easily distinguished.

The associated control information may include a radio parameter of the shared data channel, and distribution information indicating multicasting time of the user common data.

The distribution information may include transmission start timing, transmission end timing, and information indicating a repetition number of times of transmission of the user common data.

In addition to the associated control channel of an own cell, the mobile station may also receive an associated control channel of other cell that satisfies a predetermined signal quality condition. Accordingly, the mobile station can receive distribution information and user common data not only from the own cell but also from other cell to combine these (soft combining).

### [Embodiment 1]

In the following, a first embodiment of the present invention is described.

### <Communication system>

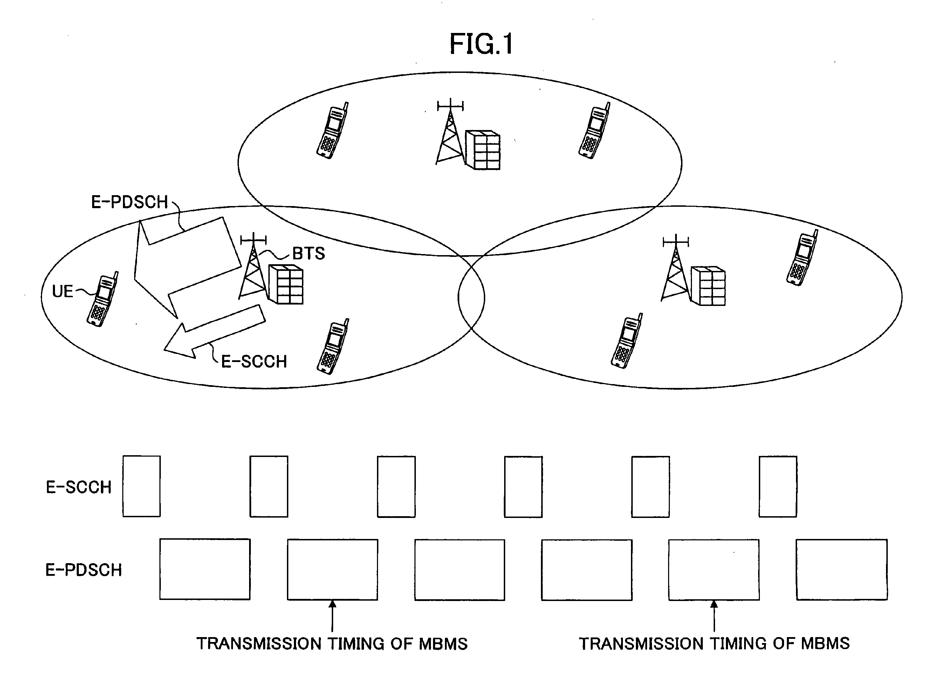

Fig.1 shows a communication system in the present embodiment. Fig.1 shows a plurality of radio base stations (BTS) and a plurality of mobile stations (UE). The base stations are connected to an upper apparatus. As the upper apparatus, a router and a broadcast multicast service center (BM-SC) and the like may be included. However, the apparatuses and a core network and the like are not shown for the sake of simplicity of representation of the figure. A shared radio physical channel (E-PDSCH) that can transmit MBMS content, and a shared associated control channel (E-SCCH) associated with the shared radio physical channel are prepared between the BTS and the UE. E-SCCH can transmit an associated control signal for MBMS content multicasting. Usage of the E-PDSCH and the E-SCCH is not limited to MBMS, and they may be used for various usages. Transmission of the MBMS content may be called multicast. Multicast in the present application means a wide concept including broadcast. E-PDSCH and E-SCCH can be shared and received by a plurality of UEs, and equal to or greater than one E-SCCH may be prepared within a same cell.

As shown in the lower side of Fig.1, E-SCCH may be time-multiplexed on a same channel for transmission. Although time-multiplexing is performed in the present embodiment, the present invention is not limited to this. For example, as defined in HSDPA, a data channel and a control channel may be code-multiplexed for transmission. In addition, scramble processing is performed on the radio channel. Since scramble is different among adjacent cells, UE can identify a cell based on the scramble.

### <Process performed until multicast of MBMS content starts>

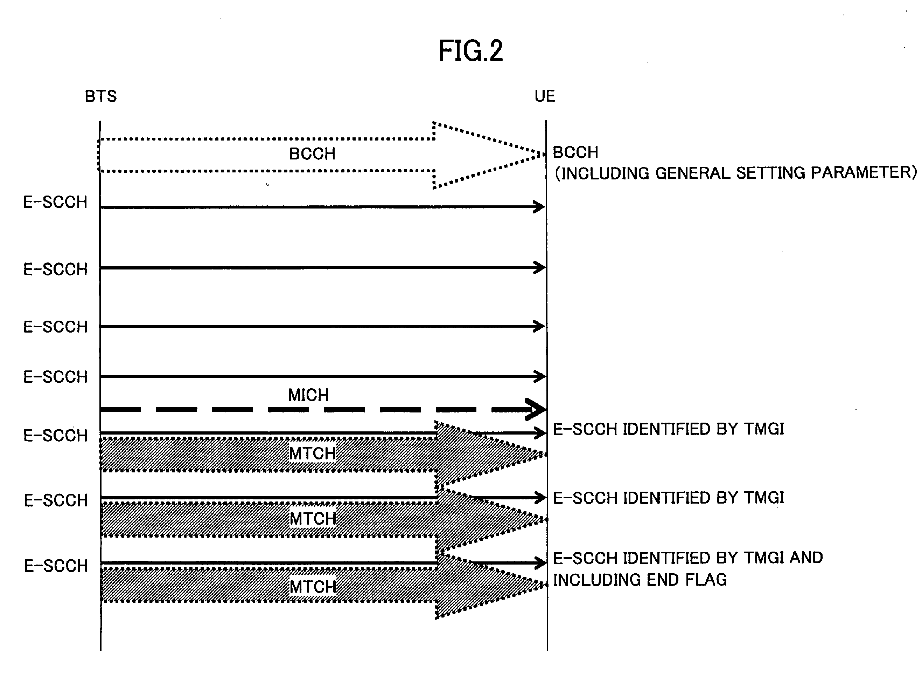

Fig.2 shows a process performed until multicasting the MBMS content. BTS repeatedly transmits broadcast information (BCCH) at a timing specified beforehand in the system (although only one time of transmission of broadcast information is shown for the sake of simplicity of the figure, it is actually performed repeatedly). The broadcast information includes "common parameter necessary for receiving MBMS content" in addition to general information that is not related to MBMS. For example, the broadcast information may include U-plane parameter (presence or absence of header compression, presence or absence of In-sequence-delivery, and the like), access control information (for IDLE, CELL_DCH, URA_PCH) and frame timing information for MBMS (DRX cycle of UE) and the like. The UE receives the broadcast information at a timing when moving to another cell or when powered on in addition to when the UE resides in the cell. In the present embodiment, although UE receives the broadcast information at a timing when moving to another cell or when powered on, the present invention is not limited to that. In the same way as general broadcast information, the broadcast information may be received when detecting that the broadcast information is changed.

Before transmitting the shared radio transmission channel (E-PDSCH), BTS transmits the shared control channel (E-SCCH) associated with it at every predetermined transmission time interval (TTI). UE in an active state or in a CELL_DCH state normally receives E-SCCH at every TTI. UE in a state (state such as IDLE, CELL_PCH and the like) that is not an active state discontinuously receives E-SCCH specified by a frame timing for MBMS as an example. The state is also called as DRX (Discontinuous Receiving) state.

When there is MBMS content scheduled to be multicasted, BTS transmits, at the frame timing for MBMS, E-SCCH on which channel coding has been performed using TMGI (Temporary MBMS Group Identifier). The TMGI is assigned to the MBMS content to be multicasted. E-SCCH is provided with at least a flag indicating continuity of MBMS content. For example, E-SCCH may further include information such as repetition number and AMC information (modulation scheme, coding rate and the like) of corresponding MBMS content, GI length (length of guard interval) of OFDM (Orthogonal Frequency Division Multiplexing). MICH is transmitted at a timing specified by the broadcast information, as an example, over any one of one or more prepared E-SCCHs, and the UE discontinuously receives MICH using the channel.

Multicasting of the MBMS content is performed over E-PDSCH following E-SCCH. UE analyzes TMGI that is channel-coded on the E-SCCH, and if there is an interesting MBMS content in MBMS services to which the UE subscribes, the UE receives MTCH that transmits the MBMS content using E-PDSCH. When E-SCCH indicates continuation of the MBMS content, the UE periodically receives the corresponding MBMS content until end flag.

### <Configuration of E-SCCH>

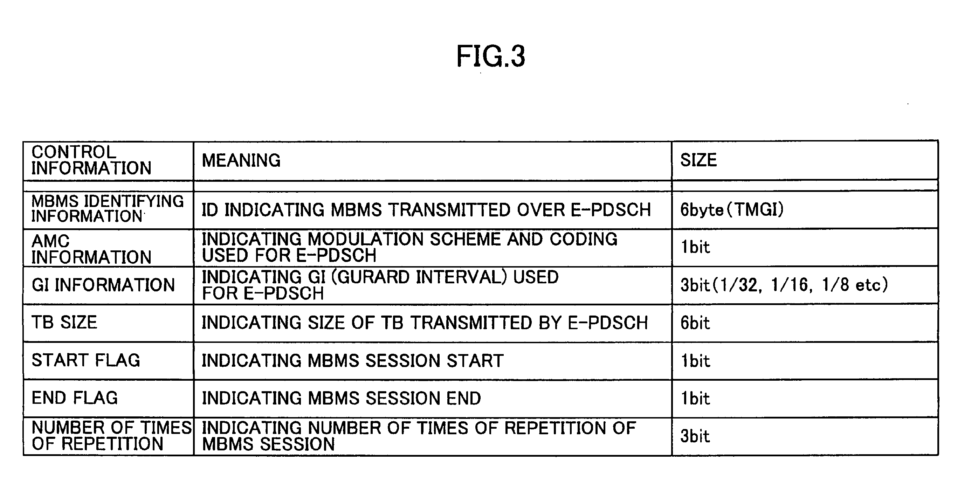

Various control information transmitted over the E-SCCH includes control information for MBMS content multicasting and general control information (control information necessary for descramble, demodulation and the like) other than the control information for MBMS content multicasting. The table shown in Fig.3 shows an example of various control information transmitted over E-SCCH. But, in the present invention, control information is not limited to the example. In addition, all of control elements transmitted on the E-SCCH are not essential, and it is only necessary to choose as necessary. The value indicating the data length is an example. The data length is not limited to the example, and the data length can be changed to more appropriate value as necessary.

In the table shown in Fig.3, MBMS identification information, start flag, end flag and repetition number of times correspond to control information for MBMS. AMC information, GI information and TB size correspond to the general control information that does not depend on information of each MBMS content. By the way, in the present invention, MTCH is transmitted by E-PDSCH, and a part (common configuration information and the like) of information (MCCH, MSCH) corresponding to control information of MTCH is transmitted as broadcast information, and a part (information depending on the MBMS service) of the MSCH and MCCH are transmitted by E-SCCH.

### <Configuration of BTS>

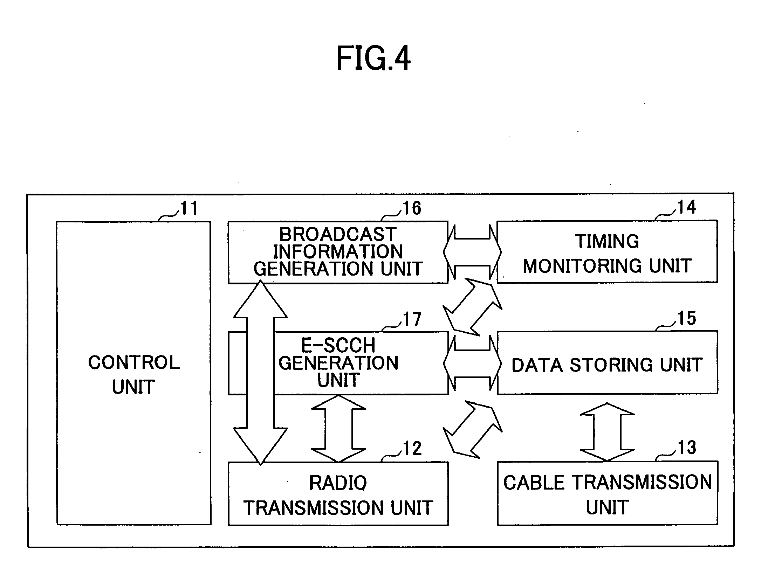

Fig.4 shows a configuration of the base station (BTS) used in the present embodiment. The BTS includes a control unit 11, a radio transmission unit 12, a cable transmission unit 13, a timing monitoring unit 14, a data storing unit 15, a broadcast information generation unit 16 and an E-SCCH generation unit 17.

The control unit 11 manages operation of all function units of the BTS, and includes a function for managing operation of each functional entity of the BTS. The radio transmission unit 12 includes functions (spreading, modulation/coding, signal amplification and the like) necessary for transmitting broadcast information and associated control information to UE over a radio channel. The cable transmission unit 13 includes functions necessary for receiving, by the BTS, data transmitted from an upper side. The timing monitoring unit 14 includes a function for monitoring transmission timing of the broadcast information and a function for monitoring transmission timing of MBMS content. The data storing unit 15 includes a function for storing MBMS content received from the upper side until transmission timing of the MBMS content. The broadcast information generation unit 16 generates broadcast information including a common parameter and control information necessary for transmitting MBMS content. The E-SCCH generation unit 17 includes a function for generating a control signal for multicasting MBMS content at a transmission timing of MBMS content.

### <Configuration of UE>

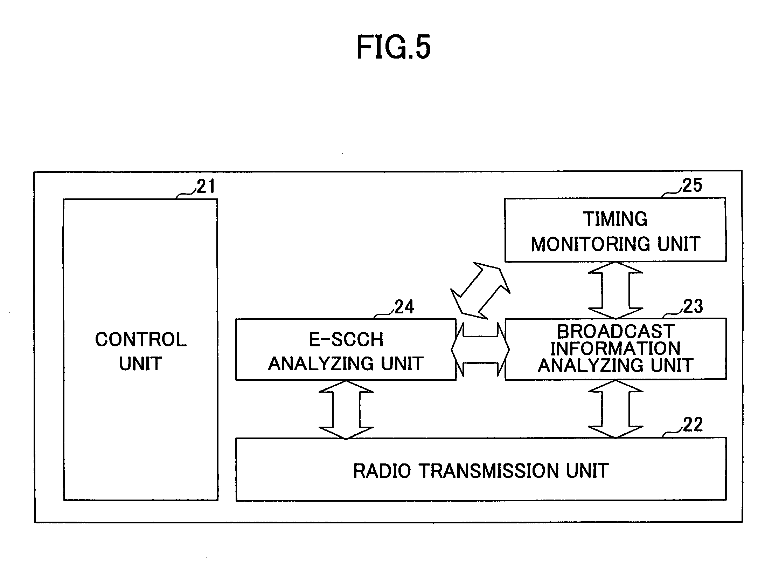

Fig.5 shows a configuration of a mobile station (UE) used in the present embodiment. The UE includes a control unit 21, a radio transmission unit 22, a broadcast information analyzing unit 23, a E-SCCH analyzing unit 24, and a timing monitoring unit 25.

The control unit 21 manages operation of all functions of the UE, and includes a function for controlling operation of each functional entity of the UE. The radio transmission unit 22 includes functions (descramble, demodulation/decoding and the like) specific to the radio layer for receiving broadcast information and the associated control signal transmitted from the BTS. The broadcast information analyzing unit 23 includes a function for analyzing a common control parameter for MBMS communication included in received broadcast information, and a function for setting the analyzed parameter in the UE. The E-SCCH analyzing unit 24 includes a function for analyzing an identifier that is channel-coded on the associated control signal that is transmitted over the E-SCCH. The timing monitoring unit 25 includes a function for monitoring a transmission timing of the broadcast information and a transmission timing of E-SCCH.

### <Operation of BTS>

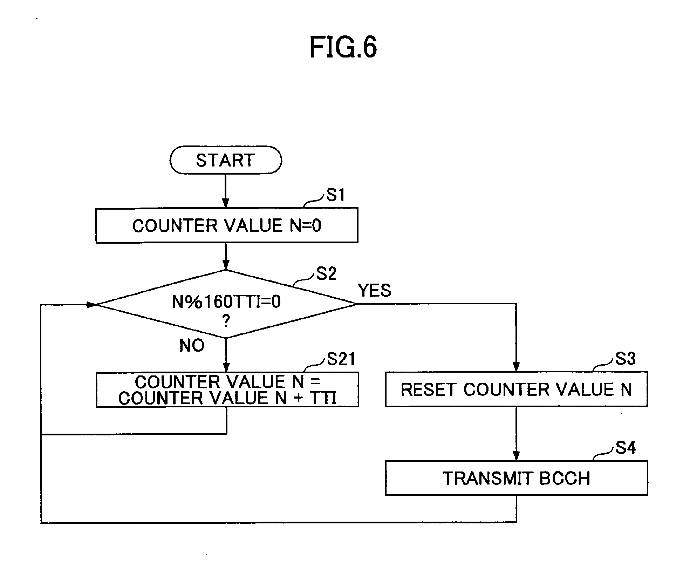

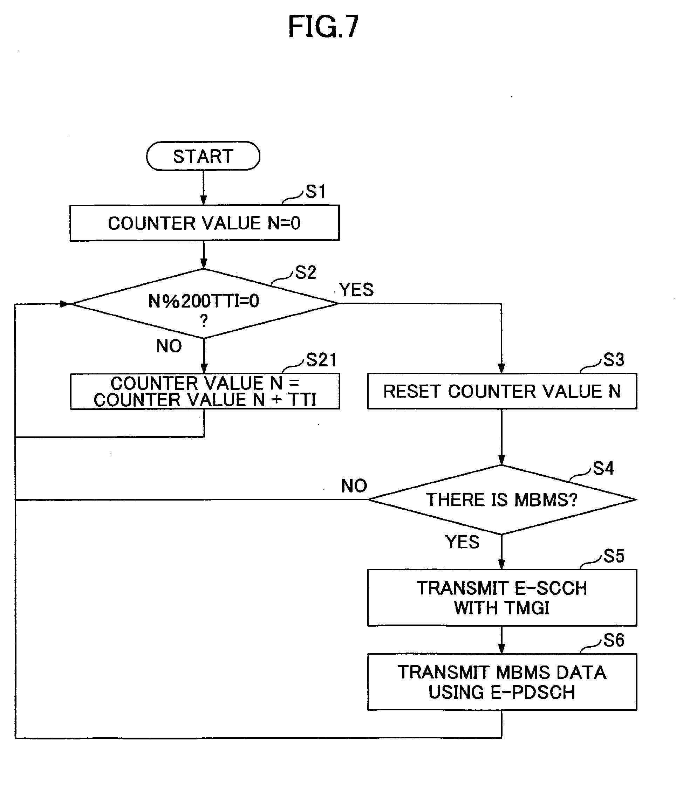

Figs.6 and 7 show operation flows of the base station used in the present embodiment. The base station transmits, as broadcast information and shared control information, information necessary for the mobile station to receive MBMS contents.

Fig.6 shows an operation flow for the base station to transmit BCCH (broadcast information). In the present embodiment, the transmission timing of the broadcast information is set to be 160 TTI (1TTI=0.5ms). But, the transmission timing of the broadcast information in the present invention is not limited to that, and other values appropriate for a system may be used.

First, a value (N) of a counter is reset and the counter value is set to be N=0 (step S1). The counter value N is divided by 160 TTI, and it is determined whether the remainder is 0 (step S2). As a result of the determination of step S2, when the remainder is not 0, 1TTI is added to the counter value N (step S21), and the flow returns to step S2. As a result of determination in step S2, when the remainder is 0, the point of time is a timing for transmitting the broadcast information and the counter value N is reset (step S3). Then, the broadcast information is transmitted using the BCCH (step S4), and the flow for transmitting the broadcast information ends, and returns to step S2. Accordingly, the broadcast information is transmitted every 160 TTI. As mentioned above, the broadcast information also includes "common parameter necessary for receiving MBMS content".

Fig.7 shows an operation flow for the base station to transmit E-SCCH. In the present embodiment, the MBMS frame timing is set to be 200TTI (LTTI = 0.5ms). But, the MBMS frame timing is not limited to that in the present invention, and other values appropriate for a system can be used.

First, a value (N) of a counter is reset in which the counter value is set to be N=0 (step S1). The counter value N is divided by 200 TTI, and it is determined whether the remainder is 0 (step S2). As a result of the determination of step S2, when the remainder is not 0, 1TTI is added to the counter value N (step S21), and the flow returns to step S2. As a result of determination in step S2, when the remainder is 0, the point of time is a timing for transmitting E-SCCH and the counter value N is reset (step S3).

Next, it is determined whether there is MBMS content to be multicasted (step S4). As a result of determination of S4, where there is MBMS content to be multicasted, E-SCCH that is channel-coded using TMGI that is assigned to the MBMS content to be multicasted is transmitted (step S5). The E-SCCH includes information listed in the table of Fig.3. After the E-SCCH is transmitted, the MBMS content is multicasted over E-PDSCH (step S6). After that, the flow returns to step S2, and the procedure described above is repeated. When there is no MBMS content to be multicasted as a result of determination of step S4, the flow returns to step S2, and the procedure described above is repeated. Alternatively, when there is no MBMS content in step S4 but there is data specific to the UE that should be transmitted, the data may be transmitted. Accordingly, radio efficiency can be further improved.

### <Operation of UE>

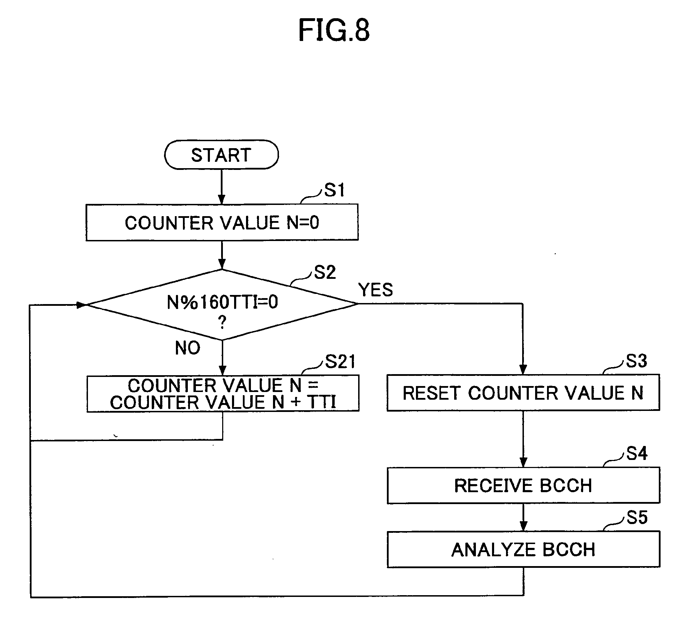

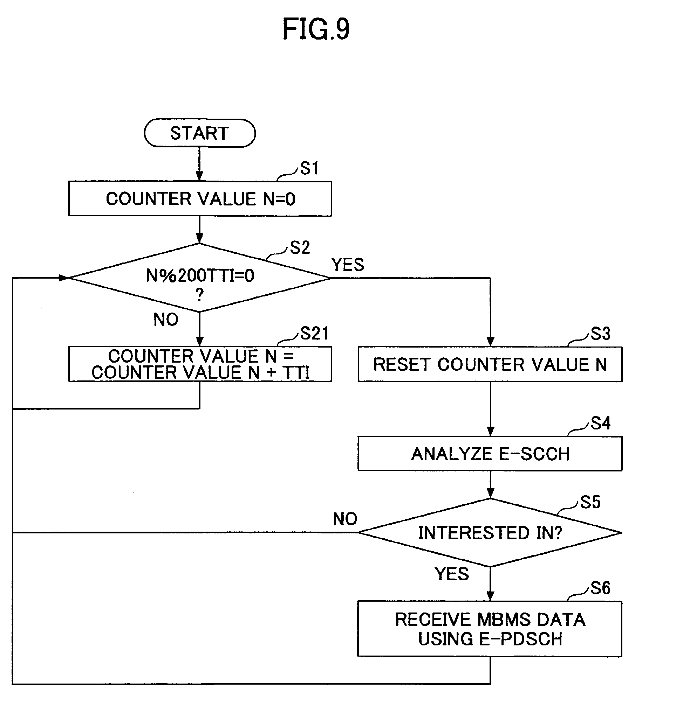

Figs.8 and 9 show operation flows of the UE assumed in the present embodiment.

Fig.8 shows a flowchart for the UE to receive broadcast information and set a common parameter. First, a counter value (N) is reset and the counter value is set to be N=0 (step S1). The counter value N is divided by 160 TTI, and it is determined whether the remainder is 0 (step S2). As a result of the determination of step S2, when the remainder is not 0, 1TTI is added to the counter value N (step S21), and the flow returns to step S2. As a result of determination in step S2, when the remainder is 0, the point of time is a timing for receiving the broadcast information and the counter value N is reset (step S3). Then, the broadcast information is received (step S4). The common parameter for MBMS multicast included in the broadcast information is analyzed, and configuration is mage according to the analyzed common parameter (step S5). After that, the flow returns to step S2, and the procedure described above is repeated.

Fig.9 shows a flow for the UE to receive E-SCCH. First, a counter value (N) is reset and the counter value is set to be N=0 (step S1). The counter value N is divided by 200 TTI, and it is determined whether the remainder is 0 (step S2). As a result of the determination of step S2, when the remainder is not 0, 1TTI is added to the counter value N (step S21), and the flow returns to step S2. As a result of determination in step S2, when the remainder is 0, the point of time is a frame timing of the E-SCCH and the counter value N is reset (step S3).

Next, for checking whether there is MBMS content to be multicasted, the UE receives the E-SCCH, and analyzes channel coding of the E-SCCH (step S4). Based on the result of analyzing of the channel coding of the E-SCCH, it is determined whether there is MBMS content that the user has subscribed to and is interested in (step S5). By the way, in step S5, for example, information on MBMS content is displayed on a display, and, based on the information, the user instructs the UE to receive or not to receive the MBMS content. Accordingly, the UE can determine presence or absence of the MBMS content that the user is interested in.

As a result of determination in step S5, when there is interesting MBMS content, receipt of the MBMS content starts (step S6). The receipt of the MBMS content continues over the E-PDSCH until an end flag is shown on the E-SCCH. After that, the flow returns to step S2, and a procedure described above is repeated. When there is only MBMS content that the user does not subscribe to or the user is not interested in as a result of determination in step S5, the flow returns to step S2, and a procedure described above is repeated.

### [Embodiment 2]

In the second embodiment of the present invention, same MBMS contents that are transmitted from a cell (serving cell) where a UE is currently residing and from an adjacent cell (non serving cell) are combined. In the present embodiment, it is desirable that a plurality of base stations are synchronized with each other in terms of time. The radio transmission unit 22 of the UE used in the present embodiment includes a function for causing a plurality of descramble and demodulation functions to operate at the same time such that the UE can receive a plurality of E-SCCHs transmitted from adjacent cells at the same time. The "cell" of the present embodiment may be defined to include a plurality of "sectors". Alternatively, "cell" may be used to mean the same meaning as "sector". In any cases, the present invention can be used. In the following description, "cell" and "sector" are used synonymously as a matter of convenience.

The UE identifies a cell (other cell), other than the own cell, that satisfies predetermined conditions (receive power, SIR and the like), receives E-SCCH transmitted in other cell, combines MBMS contents in phase that are transmitted at the same timing (performs soft combining) so that the UE can combine them efficiently. It is desirable that transmission rates and radio frequencies and the like are the same in the E-SCCHs transmitted from adjacent cells. In addition, it is desirable that transmission rates, radio frequencies, GI lengths and the like of the MBMS contents transmitted over the E-PDSCH are the same.

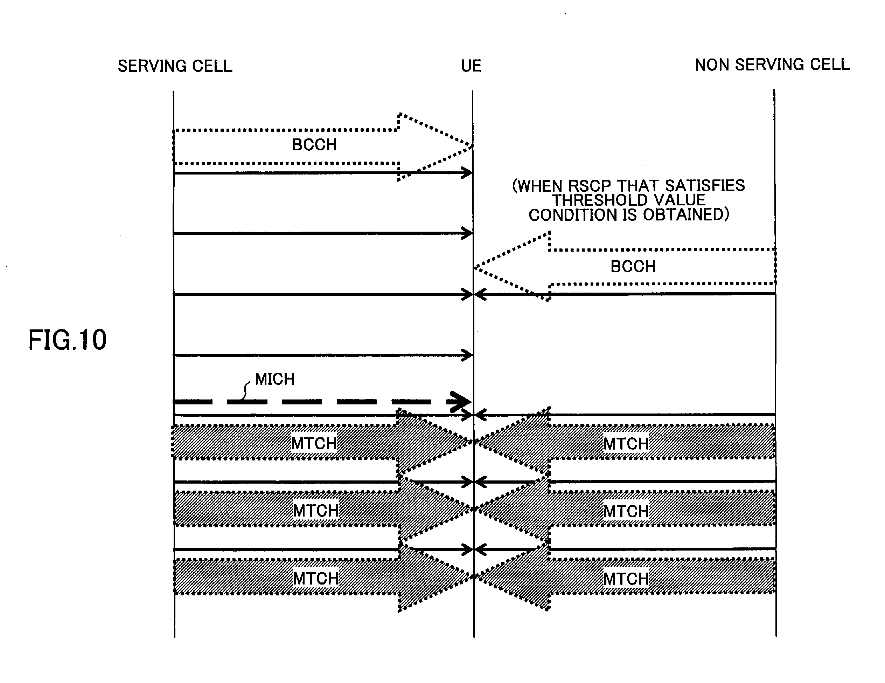

Fig.10 shows a process performed until the MBMS contents are transmitted. The BTS repeatedly transmits broadcast information at a timing specified beforehand in the system (although only one transmission of broadcast is shown for simplifying the drawing, it is actually performed repeatedly). The broadcast information includes "common parameter necessary for receiving MBMS content" in addition to general information that is not related to MBMS. For example, the broadcast information may include U-plane parameters (presence or absence of header compression, presence or absence of In-sequence-delivery and the like), access control (for IDLE, CELL_DCH, URA_PCH) and frame timing for MBMS (DRX cycle of UE) and the like. The UE receives the broadcast information at a timing when moving to other cell or when the power is turned on in addition to when the UE resides in a cell.

Before transmitting the shared radio transmission channel (E-PDSCH), the BTS transmits a shared control channel (E-SCCH) associated with it every predetermined transmission time interval (TTI). The UE in an active state or in a CELL_DCH state normally receives the E-SCCH every TTI. The UE that is in a state (such as IDLE, CELL_PCH and the like) that is not the active state discontinuously receives E-SCCH specified by the frame timing for MBMS, for example. This state is also called DRX (Discontinuous Receiving) state.

The UE performs power measurement for an adjacent cell to determine whether a received signal code power (RSCP) of CPICH from other cell exceeds a predetermined threshold vale. Although RSCP is used as an example, other amounts (such as SIR) representing signal quality may be used. When the UE is in the DRX state, the power of the adjacent cell is measured at a timing of DRX and the like. When a cell that provides RSCP exceeding the threshold value is found, the UE starts to receive E-SCCH of the adjacent cell in addition to E-SCCH of the serving cell.

When there is MBMS content to be multicasted at a frame timing for MBMS, the BTS transmits E-SCCH for which channel coding has been performed using TMGI in which the TMGI is assigned to the MBMS content to be multicasted. The E-SCCH is provided with at least a flag indicating continuity of the MBMS content. The E-SCCH may further include information such as a repetition number of the corresponding MBMS content, AMC information, GI length of OFDM.

Multicasting of MBMS content is performed over E-PDSCH that follows the E-SCCH. The UE analyzes the TMGI that is channel-coded to the E-SCCH, so that when there is interesting MBMS content in MBMS services that the UE subscribes to, the UE receives MTCH that transmits the MBMS content using the E-PDSCH. When E-SCCH shows continuity of the MBMS content, the UE periodically receives the corresponding MBMS content until reaching the end flag.

The present invention is not limited to the specifically disclosed embodiments, and variations and modifications may be made without departing from the scope of the invention.

The present application claims priority based on Japanese patent application No.2005-264417, filed in the JPO on September 12, 2005 and the entire contents of the Japanese patent application No.2005-264417 is incorporated herein by reference.

## Claims

1. A data transmission system for multicasting user common data from one or more radio base stations to one or more mobile stations,
the radio base station comprising:
means configured to generate broadcast information;
means configured to generate associated control information;
means configured to store the user common data; and
means configured to transmit the user common data using a shared data channel, transmit the associated control information using an associated control channel and transmit the broadcast information using a broadcast channel,
the mobile station comprising:
means configured to receive the shared data channel, the associated control channel and the broadcast channel; and
means configured to analyze the broadcast information and the associated control information,
wherein the broadcast information includes information indicating transmission timing of the associated control channel, and common control information necessary for multicast of the user common data, and
the associated control information includes information of a radio parameter of the shared data channel, and control information necessary for multicasting the user common data for each piece of user common data.

2. A radio base station for multicasting user common data to one or more mobile stations, comprising:
means configured to generate broadcast information;
means configured to generate associated control information;
means configured to store user common data;
means configured to transmit the user common data using a shared data channel, transmit the associated control information using an associated control channel and transmit the broadcast information using a broadcast channel,
wherein the broadcast information includes information indicating transmission timing of the associated control channel, and common control information necessary for multicast of the user common data, and
the associated control information includes information of a radio parameter of the shared data channel, and control information necessary for multicasting the user common data for each piece of user common data.

3. The radio base station as claimed in claim 2, further comprising means configured to code the associated control channel using code associated with a predetermined identifier,
wherein a part of the associated control channel including distribution information is coded using code associated with a group identifier of the user common data.

4. The radio base station as claimed in claim 2, wherein the broadcast information includes any one of information indicating a setting method of U-plane, access control information and information of an adjacent cell.

5. The radio base station as claimed in claim 2, wherein the associated control information includes any one of a radio parameter of the shared data channel and distribution information of the user common data.

6. The radio base station as claimed in claim 2, wherein the distribution information includes any one of transmission start timing, transmission end timing, and information indicating a repetition number of times of transmission of the user common data.

7. A mobile station for receiving user common data that is multicasted from one or more radio base stations, comprising:
means configured to receive user common data using a shared data channel, receive associated control information using an associated control channel and receive broadcast information using a broadcast channel;
means configured to analyze the broadcast information and the associated control information; and
means configured to set control information that is included in the analyzed broadcast information and associated control information and that is necessary for receiving the user common data.

8. A data transmission method for multicasting user common data from one or more radio base stations to one or more mobile stations, wherein,
the radio base station transmits the user common data using a shared data channel, transmits associated control information using an associated control channel, and transmits broadcast information using a broadcast channel,
the mobile station receives the shared data channel, the associated control channel and the broadcast channel to analyze the broadcast information and the associated control information,
the broadcast information includes information indicating transmission timing of the associated control channel, and
the associated control information includes information of a radio parameter of the shared data channel, and distribution information indicating multicasting time of the user common data.

9. The data transmission method as claimed in claim 8, wherein, in addition to the associated control channel of an own cell, the mobile station also receives an associated control channel of other cell that satisfies a predetermined signal quality condition.
